Europäisches Patentamt

European Patent Office

Office européen des brevets

(19)

(11) **EP 0 551 896 B1**

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.⁶: **H02P 3/06**

(21) Anmeldenummer: **93100471.7**

(22) Anmeldetag: **14.01.1993**

(54) **Bremsschaltung für kleine Universalmotoren**

Braking circuit for small universal motors

Circuit de freinage pour petits moteurs universels

(84) Benannte Vertragsstaaten:
**CH DE FR GB IT LI NL**

(30) Priorität: **16.01.1992 DE 4200983**

(43) Veröffentlichungstag der Anmeldung:
**21.07.1993 Patentblatt 1993/29**

(73) Patentinhaber: **HEINRICH KOPP AG**
**D-63796 Kahl am Main (DE)**

(72) Erfinder: **HEINRICH KOPP AG**
**D-63796 Kahl am Main (DE)**

(74) Vertreter: **Rüger, Rudolf, Dr.-Ing. et al**
**Patentanwälte**
**Rüger, Barthelt & Abel**
**Postfach 348**
**D-73704 Esslingen (DE)**

(56) Entgegenhaltungen:
**DE-A- 2 624 236          DE-A- 3 636 555**
**DE-A- 4 022 637**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Bremsschaltung für kleine Universalmotoren, die im Bremsbetrieb als Nebenschlußgeneratoren arbeiten.

Aus der DE-OS 36 36 555 ist eine Schaltungsanordnung zum Bremsen von kleinen Universalmotoren bis ca. 3 kW bekannt, bei der der Anker, die Feldwicklung und der Bremswiderstand zueinander parallelgeschaltet sind. Der Bremswiderstand wird von einem gesteuerten Leistungshalbleiter gebildet, der von einer angeschlossenen Steuerschaltung sein Steuersignal bezieht. Die Steuerschaltung mißt die Spannung an der Parallelschaltung und regelt den Leistungshalbleiter im Sinne einer Konstanthaltung der an ihm anliegenden Spannung.

Diese Schaltungsanordnung, bei der der Motor im Bremsbetrieb als Nebenschlußgenerator arbeitet, hat den Vorteil der geringen Anker-EMK und damit der geringen spannungsmäßigen Belastung des Kollektors, verglichen mit einer Hauptschlußanordnung. Allerdings geschieht die Regelung der Spannung für die Feldwicklung letztlich über den Spannungsabfall am Innenwiderstand des Ankers, wodurch sich der Kollektorstrom entsprechend erhöht.

Ausgehend hiervon ist es Aufgabe der Erfindung, eine Schaltungsanordnung zum Bremsen kleiner Universalmotoren zu schaffen, bei der die Regelung der Felderregung nicht durch eine zusätzliche Belastung des Ankers und der daraus resultierenden Veränderung der EMK erfolgt.

Diese Aufgabe wird erfindungsgemäß durch die Schaltungsanordnung mit den Merkmalen des Anspruches 1 gelöst.

Die Verwendung einer Freilaufdiode parallel zur Erregerwicklung in Verbindung mit einem getakteten elektronischen Schalter, der mit der Feldwicklung in Serie liegt, ermöglicht eine den Kollektor wenig belastende Regelung der Erregung des Motors im Bremsbetrieb. Außerdem ist die Schaltung unempfindlich gegen Aussetzer, die zu einem Zusammenbrechen der Erregung führen könnten, weil die Induktivität der Feldwicklung in Verbindung mit der parallelliegenden Freilaufdiode jederzeit kurze Spannungszusammenbrüche am Kollektor, insbesondere bei niedrigen Drehzahlen auszugleichen vermag. Der Erregerstrom bleibt auch bei solchen kurzen Spannungszusammenbrüchen am Kollektor infolge der dort auftretenden Phänomene bestehen, so daß die Bremsung bis zu niedrigen Drehzahlen ohne die Gefahr eines Aussetzens der Bremsung fortgesetzt werden kann.

Außerdem wird in dem Leistungshalbleiter wegen des Schalterbetriebs nur wenig Wärme umgesetzt. Vielmehr geschieht die Umsetzung der elektrischen Energie in Wärme bei abgeschaltetem Transistor im Erregerkreis und bei eingeschaltetem Transistor im Erregerkreis und im Ankerinnenwiderstand. Falls die im Erregerkreis umgesetzte Leistung nicht ausreicht, um den Motor mit der angekoppelten Schwungmasse hinreichend schnell zum Stillstand abzubremsen, kann zu dem Anker ein Bremswiderstand parallelgeschaltet werden. Der Strom durch den Bremswiderstand läßt sich durch Veränderung der Erregerleistung in weiten Grenzen frei variieren. Eine andere Möglichkeit, die Bremsleistung zu erhöhen, besteht darin, in dem Freilaufstromkreis für die Feldwicklung einen zusätzlichen ohmschen Widerstand einzufügen, um dadurch gleichsam die Erregerverluste zu erhöhen. Diese Schaltung hat insbesondere den Vorteil, daß als Bremswiderstand der bei größeren Motoren vorhandene Anlaßwiderstand eingesetzt werden kann, der bei Nennleistunaen von größer etwa 1,5 kW benötigt wird, um ein Auslösen der Netzsicherung durch den Einschaltstromstoß zu verhindern.

Als Leistungshalbleiter kommen bevorzugt feldgesteuerte Halbleiter, wie Mosfet und IGBT in Frage, weil sie praktisch nur für die Änderung ihres Schaltzustandes Steuerleistung erfordern, womit insgesamt die Stromaufnahme am Steuereingang der Halbleiter gering gehalten werden kann, was die Stabilisierung der Versorgungsspannung vereinfacht, die wegen des netzunabhängigen Bremsbetriebs aus der Ankerspannung abgeleitet wird. Diese Ankerspannung sinkt aber etwa proportional mit der Drehzahl, je nachdem, wie die Felderregung gesteuert wird.

Die Regelung im Bremsbetrieb kann entweder als Regelkriterium den Erregerstrom oder die Anker-EMK verwenden. Bei Regelung auf konstanten Erregerstrom entsteht eine Bremsung des Ankers mit annähernd gleich kleinem Moment, während im anderen Fall im wesentlichen mit konstanter Leistung der Motor abgebremst wird.

In jedem Falle kann die Steuerschaltung hierzu an den Leistungshalbleiter ein Steuersignal abgeben, das ein pulsweitenmoduliertes Signal ist. Bei diesem pulsweitenmodulierten Signal kann sowohl die Periodendauer als auch die Ausschaltzeit des Leistungshalbleiters konstant gehalten werden. Im einen Falle bedeutet dies ein Konstanthalten der Taktfrequenz, mit der der Leistungshalbleiter angesteuert wird, während im anderen Falle sich die Taktfrequenz mit der Ankerdrehzahl ändert, d.h. mit sinkender Ankerdrehzahl wird die Taktfrequenz kleiner, weil die Einschaltzeit des Leistungshalbleiters sich verlängert, während die Ausschaltzeit definitionsgemäß konstant gehalten wird.

Im übrigen sind Weiterbildungen der Erfindung Gegenstand von Unteransprüchen.

In der Zeichnung sind Ausführungsbeispiele des Gegenstandes der Erfindung dargestellt. Es zeigen:

Fig. 1   eine Schaltungsanordnung zum Bremsen eines kleinen Universalmotors, wobei die Steuerschaltung für den Leistungshalbleiter als Block angegeben ist,

Fig. 2   die Schaltungsanordnung nach Fig. 1 mit einem detaillierten Schaltbild der Steuerschaltung und Weglassung der Bauelemente, die im Motorbetrieb bzw. zum Umschalten in den Bremsbetrieb erforderlich sind,

Fig. 3 eine Schaltungsanordnung zum Bremsen eines kleinen Universalmotors, wobei der Bremswiderstand von dem Anlaßwiderstand gebildet ist und die Steuerschaltung als Schaltungsblock veranschaulicht ist und

Fig. 4 die Schaltungsanordnung nach Fig. 3 mit einem detaillierten Schaltbild der Steuerschaltung unter Weglassung der im Motorbetrieb und zum Umschalten in den Bremsbetrieb notwendigen Bauelemente.

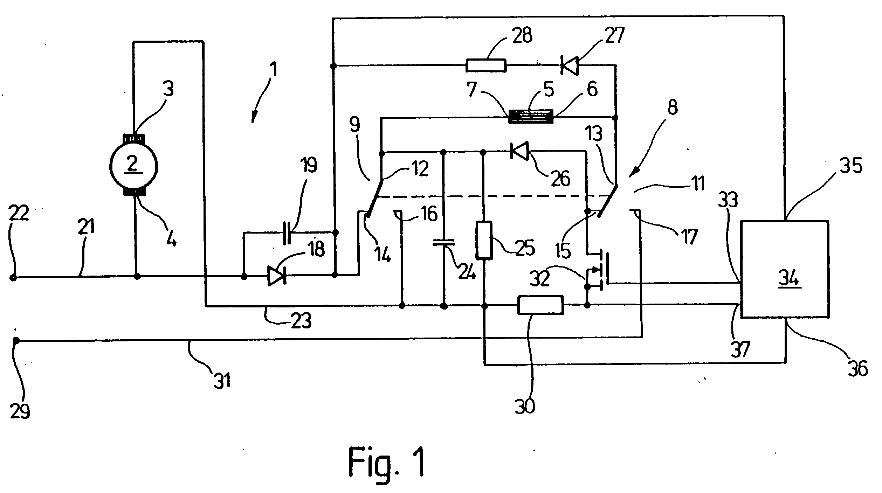

Fig. 1 zeigt eine Schaltungsanordnung zum Bremsen eines Universalmotors 1, wie er zum Antrieb von handgeführten Elektrowerkzeugen verwendet wird und mit der für den Verwendungszweck typischen elektrischen Aufnahmeleistung. Der Universalmotor 1 weist einen Anker 2 mit zwei Anschlüssen 3 und 4 sowie eine geteilte oder ungeteilte Feldwicklung 5 mit ihren beiden Anschlüssen 6 und 7 auf. Mit Hilfe einer Umpoleinrichtung 8 können der Anker 2 und die Feldwicklung 5 in unterschiedlichen Phasenlagen zueinander miteinander verbunden werden. Die Umpoleinrichtung 8 enthält zwei Umschalter 9 und 11 mit je einem beweglichen Kontakt 12 bzw. 13 sowie einem Ruhekontakt 14 bzw. 15 und einem Arbeitskontakt 16 bzw. 17. Die Feldwicklung 5 ist mit ihren beiden Anschlüssen 6 und 7 an die beweglichen Kontakte 12 und 13, wie gezeigt, angeschlossen.

Der Ruhekonakt 14 ist über die Parallelschaltung einer Diode 18 sowie eines Kondensators 19 mit dem Anschluß 4 des Ankers 2 verbunden, wobei die Kathode der Diode 18 an dem Ruhekontakt 14 liegt. Eine weitere Verbindungsleitung 21 führt von dem Ankeranschluß 4 zu einer Netzeingangsklemme 22.

Der andere Anschluß 3 des Ankers 2 ist über eine Leitung 23 mit dem Arbeitskontakt 16 verbunden und an eine Parallelschaltung aus einem Kondensator 24 sowie einem Bremswiderstand 25 angeschaltet. Die Parallelschaltung aus dem Kondensator 24 und dem Bremswiderstand 25 liegt anderenends an dem beweglichen Kontakt 12, der über eine Diode 26 mit dem Arbeitskontakt 15 in Verbindung steht, wobei die Anode der Diode 26 an dem Ruhekontakt 15 angeschaltet ist. Ferner führt von dem beweglichen Kontakt 13 die Serienschaltung aus einer Diode 27 und einem Strombegrenzungswiderstand 28 zu dem Ruhekontakt 14. Die Diode 27 ist mit ihrer Anode dem beweglichen Kontakt 13 zugekehrt. Schließlich besteht von dem Arbeitskontakt 17 eine Verbindung zu einer zweiten Netzeingangsklemme 29 über eine Leitung 31.

Zur Regelung des Bremsvorganges ist ein selbstsperrender MOS-Fet 32 vorgesehen, der mit seiner Drainelektrode an dem Ruhekontakt 15 liegt und dessen Source-Elektrode über einen Widerstand 30 an der Leitung 23 angeschaltet ist, die das Bezugspotential im Bremsbetrieb führt.

Das Gate des Feldeffekttransistors 32 ist an einen Ausgang 33 einer Steuerschaltung 34 angeschlossen, die über einen Eingang 35 ihre Versorgungsspannung von dem Ruhekontakt 14 erhält, während ihr anderer Versorgungsspannungseingang 36 an die Leitung 23 angeschlossen ist. Schließlich besteht eine Verbindung zwischen der Source-Elektrode des Transistors 32 und einem Eingang 37.

Im Motorbetrieb liegt an den Netzeingangsklemmen 22, 29 eine Netzspannung an und es ist die Umpoleinrichtung 8 in die Arbeitsstellung umgeschaltet, in der der bewegliche Kontakt 12 bzw. 13 mit dem Arbeitskontakt 16 bzw. 17 verbunden ist. Dadurch kann ein Strom von der Netzeingangsklemme 22 über die Leitung 21 in den Anker 2 und von dort über die Leitung 23 sowie den geschlossenen Arbeitskontakt 16 zu der Feldwicklung 5 fließen. Von der Feldwicklung 5 fließt der Strom über den geschlossenen Arbeitskontakt 17 und die Leitung 31 zu der Netzeingangsklemme 29 zurück. Gleichzeitig wird über die Diode 27 und den Strombegrenzungswiderstand 28 der Kondensator 19 aufgeladen, der in diesem Betriebszustand zusammen mit der Diode 27 und dem Strombegrenzungswiderstand 28 eine Serienschaltung bildet, die zu den Netzeingangsklemmen 22 und 29 parallel liegt.

Zwar erhält die Steuerschaltung 34 eine Versorgungsspannung, doch hat das von ihr an dem Ausgang 33 gegebenenfalls abgegebene Signal keinen Einfluß auf den Betrieb des Universalmotors 1. Die beiden Dioden 18 und 27 sind gegeneinander geschaltet, so daß bei der gezeigten Anordnung der Kondensator 19 bei der entsprechenden Halbwelle der Netzwechselspannung mit einer Polarität aufgeladen wird, bei der die an dem Ruhekontakt 14 liegende Elektrode positiv ist gegenüber der Elektrode, die mit der Netzeingangsklemme 22 bzw. dem Anschluß 4 des Ankers 2 in Verbindung steht.

Wenn am Ende des Motorbetriebs die Umpoleinrichtung 8 losgelassen wird, schaltet sie in den gezeigten Zustand zurück, wobei gleichzeitig die Verbindung zu der Netzeingangsklemme 29 unterbrochen wird. Wegen der Umschaltung ändert sich außerdem die Phasenlage, mit der die Feldwicklung 5 und der Anker 2 zusammengeschaltet sind. Während im Motorbetrieb der Anschluß 3 des Ankers 2 mit dem Anschluß 7 der Feldwicklung in Verbindung steht, ist es im Bremsbetrieb der Anschluß 4, der über die Diode 18 mit dem Ende 7 der Feldwicklung 5 verbunden ist, während der Anschluß 3 über den Feldeffekttransistor 32 mit dem Anschluß 6 der Feldwicklung in Verbindung steht.

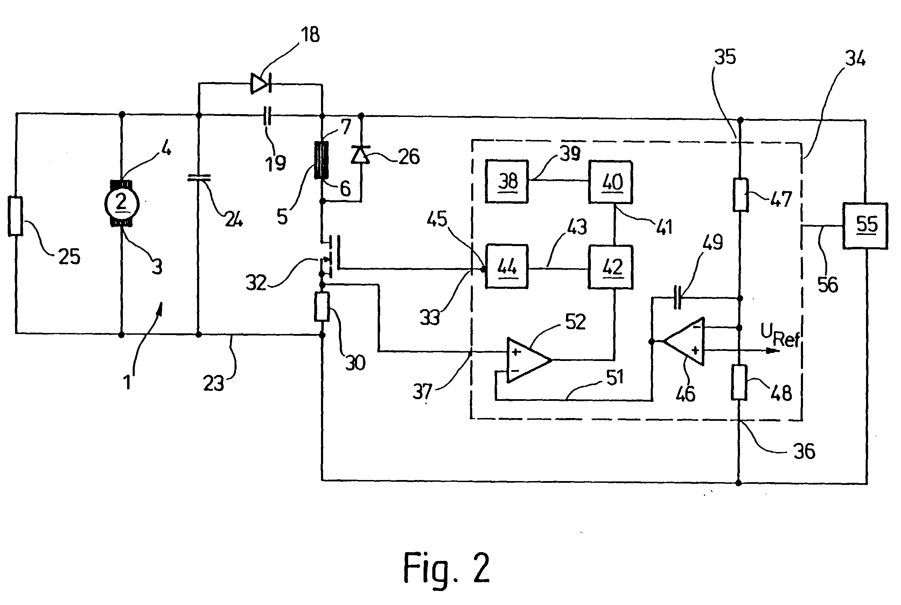

Nach dem Umschalten in den Bremsbetrieb sind die Diode 27 und der Widerstand 28 wirkungslos. Der Übersichtlichkeit halber zeigt Fig. 2 ein insoweit vereinfachtes Schaltbild, das den Stromlauf im Bremsbetrieb widergibt, wobei die Bauelemente, die zum Umschalten notwendig sind, ebenso weggelassen sind wie die Bauelemente, die für den Motorbetrieb erforderlich sind. Wie sich aus der vereinfachten Darstellung für den Bremsbetrieb ergibt, liegt im Bremsbetrieb der Bremswiderstand 25 unmittelbar zu dem Anker 2 parallel, ebenso wie der Kondensator 24. Die Feldwicklung 5 ist dagegen über die Parallelschaltung aus der Diode 18 und dem Kondensator 19 mit dem Anker 2 verbunden. Außerdem ist ersichtlich, daß die Diode 26 für die Feldwicklung 5 eine Freilaufdiode darstellt, und mit Hilfe des Feldeffekttransistors 32 die von dem Anker 2 abgegebene Spannung auf die Feldwicklung 5 geschaltet werden kann.

Die insoweit erläuterte Schaltung arbeitet im Bremsbetrieb wie folgt: Unmittelbar nach dem Umschalten in den Bremsbetrieb erzeugt der Kondensator 19 eine Versorgungsspannung für die Steuerschaltung 34, da er einerseits unmittelbar an dem Stromversorgungseingang 35 und über den Anker 2 bzw. den Widerstand 25 sowie den leeren Kondensator 24 mit dem Stromversorgungseingang 36 der Steuerschaltung 34 verbunden ist. Die in Aufbau und Funktion weiter unten noch im einzelnen beschriebene Steuerschaltung 34 gibt daraufhin an ihrem Ausgang 33 umgehend ein Signal ab, das den selbstsperrenden Feldeffekttransistor 32, der ein Leistungshalbleiter ist, durchsteuert. Damit entsteht ein weiterer Entladestromkreis für den Kondensator 19, der die Feldwicklung 5 und in Serie damit die Parallelschaltung aus dem Bremswiderstand 25, dem Anker 3 und dem Kondensator 24 enthält. Dieser Entladestrom des Kondensators 19 führt zur Selbsterregung des Universalmotors 1, der nun als Nebenschlußgenerator arbeitet. Sobald nach kurzer Zeit der Kondensator 19 entladen ist, kommutiert der Strom auf die Diode 18 und fließt in gleicher Weise weiter. Der Kondensator 19 bildet ersichtlicherweise eine Ladeschaltung, die unabhängig von dem Restmagnetismus im Anker 2 und in der Feldwicklung 5 zwangsläufig die Selbsterregung einleitet, und zwar mit einer Polarität, die durch die Polarität der Spannung an dem Kondensator 19 festgelegt ist. Da er im vorausgehenden Motorbetrieb jeweils über die Diode 27 aufgeladen wird, liegt die Polarität der Ladespannung fest und jedes Umschalten in den Bremsbetrieb führt zu einem Bremsstrom in derselben Richtung.

Sobald die Selbsterregung einmal in Gang gekommen ist, steigt die Spannung an dem Anker 2 und in der Folge der Strom durch den Widerstand 30 an, bis der Strom eine Größe erreicht hat, die die Steuerschaltung 34 veranlaßt, den Feldeffekttransistor 32 abzuschalten. Der Erregerstrom, der vor dem Abschalten des Feldeffekttransistors 32 durch diesen geflossen ist, fließt nach dem Abschalten des Feldeffekttransistors 32 als Freilaufstrom über die Diode 26 weiter, womit die Felderregung erhalten bleibt. Der Anker 2 erzeugt folglich weiterhin eine EMK, die zu einem fortdauernden Strom durch den Bremswiderstand 25 führt. Es fließt ständig Strom aus dem Anker 2, der sich in der Einschaltphase des Feldeffekttransistors 32 auf einen Strom durch die Feldwicklung 5 und den Bremswiderstand 25 aufteilt und der im Ausschaltzustand des Feldeffekttransistors 32 durch den Bremswiderstand 25 und in den Kondensator 24 fließt. Somit wird während beider Schaltphasen des Transistors 32 die kinetische Energie des Ankers 2 in Strom und dieser schließlich in Wärme umgesetzt und damit der Anker 2 gebremst.

Nach einer durch die Steuerschaltung festgelegten Zeitspanne wird der Feldeffekttransistor 32 erneut eingeschaltet.

Da in der vorausgehenden Abschaltphase des Feldeffekttransistors 32 auch der Strom in dem Freilaufkreis, gebildet durch die Feldwicklung 5 und die Freilaufdiode 26 abgesunken ist, ist die Klemmenspannung des Ankers 2 nicht nur wegen der zwischenzeitlich gesunkenen Ankerdrehzahl ebenfalls gesunken. Durch das erneute Einschalten des Feldeffekttransistors 32 wird der Erregerstrom durch die Feldwicklung 5 wieder erhöht. Dabei bleibt der Transistor 32 solange eingeschaltet, bis die Spannung an dem Widerstand 30 wieder einen in der Steuerschaltung 34 festgelegten Grenzwert übersteigt.

Der Grenzwert für den Spannungsabfall an dem als Stromfühler dienenden Widerstand 30 ist ein schwimmender Grenzwert, der in weiter unten erläuterter Weise mit Hilfe eines Integrators erreicht wird, der eine Spannung, die zu der zwischen den Stromversorgungsanschlüssen 35 und 36 anstehenden Spannung proportional ist, mit einem festgelegten Sollwert vergleicht. Auf diese Weise wird letztlich auf konstante Anker-EMK eingeregelt, obwohl das unmittelbare Abschaltkriterium der Strom durch den Transistor 32 ist. Diese Form der Regelung hat den Vorteil, daß die Welligkeit der Anker-EMK nur geringen Einfluß auf die Regelcharakteristik hat und keine spezielle Siebung für die Regelspannung erforderlich ist.

Der Kondensator 24 hat die Aufgabe, Spannungsspitzen am Kollektor des Ankers 2 zu vermindern, die entstehen, wenn der Strom durch den Feldeffekttransistor 32 abgeschaltet wird.

Weil die Steuerschaltung 34 bestrebt ist, eine konstante Ankerspannung aufrechtzuerhalten, wird der Motor 1 im wesentlichen mit konstanter Leistung abgebremst.

Die Steuerschaltung 34 ist im wesentlichen ein pulsweitenmodulierter Oszillator mit fester Frequenz.

Die Steuerschaltung 34 weist einen Oszillator 38 mit fester Arbeitsfrequenz auf, der an seinem Ausgang 39 ein Rechtecksignal abgibt. Das Rechtecksignal gelangt von dem Ausgang 39 in einen Differenzierer 40, der mit seinem Ausgang 41 an ein Flipflop 42 mit einem invertierten Setzeingang $\bar{S}$, einem invertierten Rücksetzeingang $\bar{R}$ und einem invertierten Ausgang $\bar{Q}$ angeschlossen ist, und zwar liegt der Ausgang 41 an dem invertierten Setzeingang $\bar{S}$. Von dem invertierten Ausgang $\bar{Q}$ des Flipflops 42 führt eine Leitung 43 zu einem Treiber 44, dessen Ausgang 45 den Ausgang 33 der steuerschaltung 34 darstellt. Der Treiber 44 hat lediglich die Aufgabe, genügend Strom zu liefern, um den Feldeffekttransistor 32 schnell zwischen seinen beiden Schaltzuständen hin- und herschalten zu können.

Die Steuerschaltung 34 enthält ferner einen Komparator 46, dessen invertierender Eingang an einen Spannungsteiler aus zwei Widerständen 47 und 48 liegt. Die Widerstände 47 und 48 liegen in Serie zwischen den beiden Stromversorgungseingängen 35 und 36, und teilen die dort anstehende Spannung auf eine geeignete proportionale Spannung herunter, die in den invertierenden Eingang des Komparators 46 gelangt. Der nicht invertierende Eingang des Komparators 46 ist mit einer Referenzspannung $U_{ref}$ beaufschlagt. Außerdem ist der invertierende Eingang des Komparators 46 mittels eines Kondensators 49 gegen den Ausgang kapazitiv rückgekoppelt, so daß ein vergleichender Integrator entsteht.

Von dem Ausgang des Integrators 46 führt eine Verbindung 51 zu einem invertierenden Eingang eines weiteren Komparators 52, der mit seinem Ausgang an den invertierten Rücksetzeingang des Flipflops 42 angeschaltet ist. Der nicht invertierende Eingang des Komparators 52 liegt an dem Eingang 37 und somit an dem heißen Ende des Widerstands 30, um den Spannungsabfall dort gegenüber dem Bezugspotential auf der Leitung 23 zu erfassen.

Zur Stromversorgung der Steuerschaltung 34 ist eine Spannungsstabilisierung 55 vorhanden, die zu den Stromversorgungseingängen 35 und 36 parallelgeschaltet ist und über einen Anschluß 56 eine stabilisierte Versorgungsspannung gegenüber der Leitung 23 einspeist.

Die Funktionsweise der insoweit ergänzten Schaltung ist wie folgt: Unmittelbar nach dem Umschalten in den Bremsbetrieb entsteht die in Fig. 2 gezeigte Parallelschaltung aus dem Anker 2, dem Bremswiderstand 25 sowie dem Kondensator 24. Die Feldwicklung 5 ist über den Kondensator 19 bzw. die Diode 18 und den in Serie mit ihr geschalteten Transistor 32 sowie dem als Stromfühler dienenden Widerstand 30 ebenfalls parallelgeschaltet. Die Anordnung hat damit, wie bereits vorstehend erwähnt, Nebenschlußcharakteristik.

Unmittelbar nach dem Umschalten erzeugt der Kondensator 19 eine Versorgungsspannung für die Spannungsstabilisierung 55, die eine entsprechende Spannung über die Leitung 56 an die Steuerschaltung 34 abgibt. In der steuerschaltung 34 beginnt umgehend der Oszillator 38 anzuschwingen und mittels des von ihm erzeugten Rechtecksignals, aus dem in dem Differenzierer 40 Nadelimpulse gemacht werden, wird das Flipflop 42 in einen Zustand geschaltet, der den Treiber 44 veranlaßt, an seinem Ausgang 45 eine von null verschiedene Spannung in das Gate des Transistors 32 einzuspeisen, der daraufhin aufgesteuert wird. Gleichzeitig beginnt der als Integrator geschaltete Komparator 46, die zwischen den Anschlüssen 35 und 36 anstehende Spannung mit der Referenzspannung $U_{ref}$ zu vergleichen und den Differenzwert zu integrieren. Der erhaltene integrierte Wert ist der Vergleichswert für den Komparator 52.

Sobald die an dem Widerstand 30 abfallende Spannung den von dem Komparator 46 gelieferten Referenzwert übersteigt, wird das Flipflop 42 umgeschaltet, was in der Folge zu einem Abschalten des Transistors 32 führt.

Somit ist bereits unmittelbar nach dem Einschalten des Bremsbetriebs der Transistor 32 einmal durchgesteuert, um in der Feldwicklung 5 einen hinreichenden Feldstrom zu erzeugen, der nach dem Abschalten des Transistors 32 als Freilaufstrom über die Diode 26 weiterfließt. Die an den Anschlüssen 35 und 36 anstehende Spannung ist nach dem Einleiten der Selbsterregung und dem Kommutieren des Stroms von dem Kondensator 19 auf die Diode 18 gleich der von dem Anker 3 abgegebenen Spannung. Durch den oben erwähnten Vergleich dieser Spannung mit einem Referenzwert und der nachfolgenden Integration wird für den Komparator 32 solange der Grenzwert für den Strom verstellt, bis die durch die Spannungsteilerwiderstände 47 und 48 heruntergeteilte Spannung zwischen den Stromversorgungsanschlüssen 35 und 36 gleich dem Referenzwert $U_{ref}$ ist. Da der Erregerstrom in der Feldwicklung 5 und die von dem Anker 2 bei konstanter Drehzahl abgegebene Spannung miteinander verknüpft sind, kann die Steuerschaltung 34 die Ankerspannung konstant halten, obwohl als Abschaltkriterium für den Transistor 32 der durch den Widerstand 30 fließende Strom verwendet wird.

Die Schaltung hat den Vorteil, daß die Welligkeit, die die Ankerspannung zwangsläufig zeigt, wegen der Integration keinen Einfluß auf die Steuerung hat.

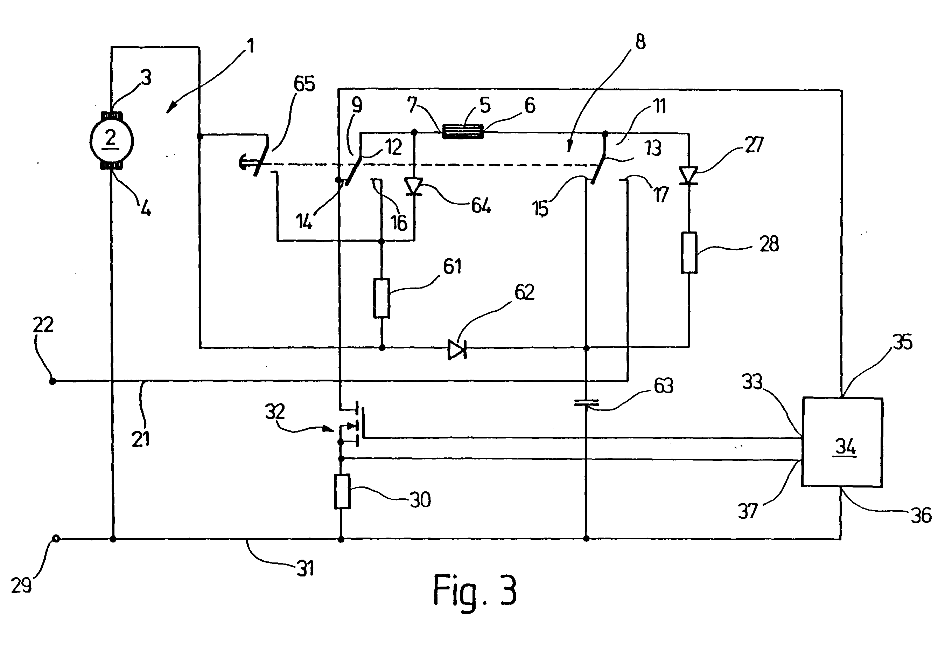

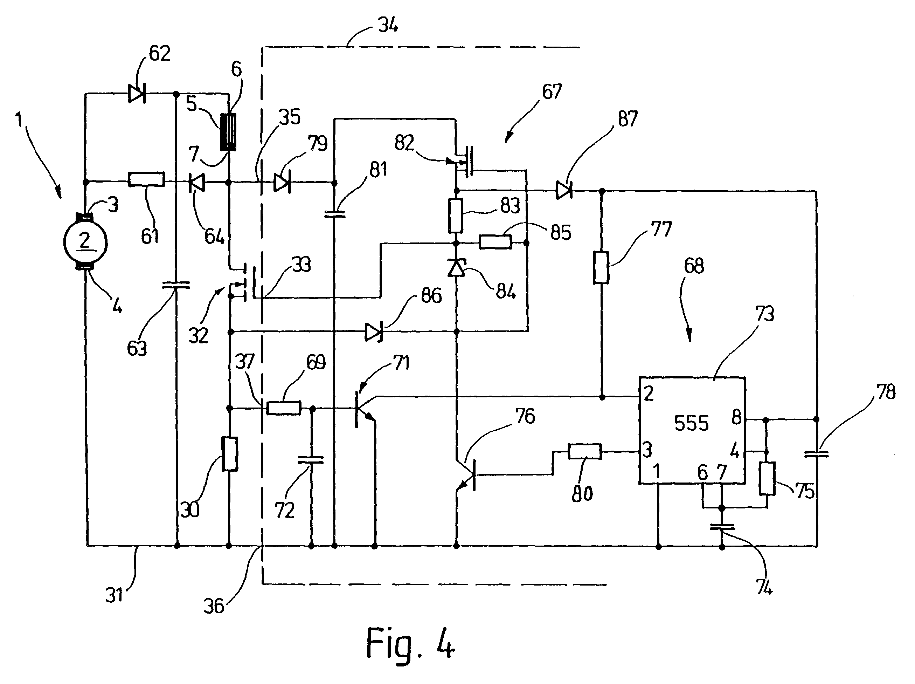

Während bei der Schaltungsanordnung nach den Fig. 1 und 2 der Bremswiderstand 25 zu dem Anker 2 parallelgeschaltet ist, zeigen die Fig. 3 und 4 eine Ausführungsform, bei der der Bremswiderstand 25 in dem Freilaufstromkreis der Feldwicklung 5 enthalten ist. Eine solche Schaltungsvariante ist zweckmäßig, wenn als Bremswiderstand der Anlaßwiderstand verwendet werden soll, der bei Universalmotoren etwa ab 1,5 kW benötigt wird, um den Einschaltstromstoß auf Werte zu vermindern, die nicht zu einem Auslösen der Netzsicherung führen. Ein solcher Anlaßwiderstand wäre in aller Regel zu klein, um ihn gemäß Fig. 1 bzw. Fig. 2 unmittelbar zu dem Anker 2 parallelzuschalten, weil dadurch ein unerwünscht großer Kollektorstrom im Bremsbetrieb zustandekommen würde. Der Anlaßwiderstand ist beispielsweise eine bifilare Wicklung auf dem Feldjoch oder ein sonstiger Festwiderstand.

Soweit in den Fig. 3 und 4 bereits erläuterte Bauelemente wiederkehren, die hinsichtlich ihrer Funktion mit den Bauelementen nach den Fig. 1 und 2 übereinstimmen, sind dieselben Bezugszeichen verwendet.

Der Anschluß 4 des Ankers 2 ist mit der Leitung 31 und damit mit der Netzanschlußklemme 29 verbunden. Von dem Anschluß 3 führt eine Verbindung über einen Widerstand 61 zu dem Arbeitskontakt 16 und über eine Diode 62 zu dem Ruhekontakt 15. Der Arbeitskontakt 17 ist über die Leitung 21 mit der Netzanschlußklemme 22 verbunden. Außerdem ist die Serienschaltung aus der Diode 27 und dem Strombegrenzungswiderstand 28 vorhanden, die jedoch zu dem beweglichen Kontakt 13 und dem Ruhekontakt 15 parallelliegt, um einen sowohl als Glättungs- als auch als Startkondensator für die Selbsterregung dienenden Kondensator 63 aufzuladen. Der Kondensator 63 ist zwischen den Ruhekontakt 15 und die Leitung 31 geschaltet. Die Feldwicklung 5 bzw. der für den Bremsbetrieb notwendige Teil der Feldwicklung 5 liegt, wie vorher, an den beiden beweglichen Kontakten 12 und 13.

Von der Umschalteinrichtung 8 ist schließlich der bewegliche Kontakt 12 und der Arbeitskontakt 16 durch eine Diode 64 überbrückt, die mit ihrer Anode an der Feldwicklung bzw. dem beweglichen Kontakt 12 liegt.

Da, wie oben erwähnt, der Widerstand 61 gleichzeitig als Anlaßwiderstand dient, weist die Umschalteinrichtung 8 bei Fig. 3 noch einen zusätzlichen Arbeitskontakt 65 auf, der, elektrisch gesehen, dem Anlaß- und Bremswiderstand 61 parallelgeschaltet ist.

Zwischen dem Ruhekontakt 14 und der Leitung 31 liegt schließlich die bereits aus Fig. 1 bzw. 2 bekannte Serienschaltung aus dem steuerbaren Leistungshalbleiter 32 und dem Stromfühlerwiderstand 30.

An das Gate des Transistors 32 und an dessen Source-Elektrode, also zwischen der Source-Elektrode und dem Widerstand 30, ist mit ihren Eingängen 33 und 37 die Steuerschaltung 34 angeschaltet, die von dem Ruhekontakt 14 und der Leitung 31 an ihren Stromversorgungseingängen 35 und 36 mit Strom versorgt wird.

Die Steuerschaltung 34 arbeitet auch hier wieder als pulsbreitenmodulierter Oszillator, wobei jedoch die Ausschaltzeit des Transistors 32 fix ist, so daß sich die Periodendauer während des Bremsvorganges ändert.

Zum Motorbetrieb wird die Umschalteinrichtung 8 betätigt, wodurch der Arbeitskontakt 16 und der Arbeitskontakt 17 geschlossen werden, während zunächst der Arbeitskontakt 65 noch offen ist. Damit wird die nicht gezeichnete Stellung der Umschalteinrichtung 8 erreicht, womit ein Strom aus der Netzanschlußklemme 22 über den Arbeitskontakt 17 zu der Feldwicklung 5, von dort über den Arbeitskontakt 16, den Anlaßwiderstand 61 zu dem Anker 2 und von dort zu der anderen Netzanschlußklemme 29 fließen kann. Sobald der Universalmotor 1 weit genug hochgelaufen ist, wird auch der Arbeitskontakt 65 automatisch geschlossen. Dadurch wird der Anlaßwiderstand 61 kurzgeschlossen.

Im Motorbetrieb wird außerdem bei der entsprechenden Netzhalbwelle über die Diode 27 und den Strombegrenzungswiderstand 28 der Kondensator 63 auf die Scheitelspannung des Netzes aufgeladen gehalten.

Am Ende des Motorbetriebs wird die Umschalteinrichtung 8 losgelassen, die daraufhin in die gezeichnete Ruhestellung zurückkehrt. In dieser Stellung der Umschalteinrichtung ändert sich die Polarität der Feldwicklung 5 gegenüber dem Anker insofern, als nun der Anschluß 6 mit dem Anschluß 3 des Ankers 2 verbunden ist, während es im Motorbetrieb der Anschluß 7 der Feldwicklung 5 war, der mit dem Anschluß 3 des Ankers 2 in Verbindung stand.

Nach dem Umschalten in den Bremsbetrieb liegt zu dem Anker 2 die Serienschaltung aus der Diode 62 der Feldwicklung 5 dem gesteuerten Leistungshalbleiter 32 sowie dem Stromfühlerwiderstand 30 parallel. Außerdem ist die Serienschaltung aus der Diode 64 und dem Brems- und Anlaßwiderstand 61 zu der Serienschaltung aus der Diode 62 und der Feldwicklung 5 parallelgeschaltet.

Die beiden Dioden 62 und 64 schließen somit über den Brems- und Anlaßwiderstand 61 den Freilaufstromkreis für die Feldwicklung 5. Schließlich liegt noch zu der Serienschaltung aus der Feldwicklung 5, dem Transistor 32 und dem Widerstand 30 der Lade- oder Startkondensator 63 parallel. Es wird damit im Ruhezustand der Umschalteinrichtung 8 ein Stromkreislauf erzeugt, wie er in Fig. 4 auf der linken Seite veranschaulicht ist, der sämtliche beim Bremsen wirksamen Bauelemente enthält, während die Umschalteinrichtung 8 und die Bauelemente, die im Motorbetrieb wirksam sind, weggelassen sind.

Da unmittelbar nach dem Umschalten in den Bremsbetrieb der Kondensator 63 noch geladen ist, entsteht über die Feldwicklung 5 eine Versorgungsspannung für die Steuerschaltung 34, die in einer weiter unten noch erläuterten Weise daraufhin umgehend den Leistungstransistor 32 durchsteuert, so daß ein weiterer Entladestrom des Kondensators 63 durch die Feldwicklung 5 den als selbstsperrenden MOS-Fet ausgeführten Leistungstransistor 32 und den Widerstand 30 gelangen kann. Der dadurch in der Feldwicklung 5 entstehende Erregerstrom führt zur Selbsterregung des Universalmotors 1 im Generatorbetrieb, wodurch dieser gebremst wird. Eine Entladung des Kondensators 63 durch die Diode 62 ist nicht möglich. Jedoch kann, je nachdem wie die Erregerverhältnisse sind, unter Umständen kurzfristig noch ein Entladestrom über die Diode 64 den Bremswiderstand 61 und den Anker 2 fließen, was aber hinsichtlich der Selbsterregung des Universalmotors 1 zu keinen Schwierigkeiten bei der Selbsterregung führt, weil auch dieser Strom nur durch die Feldwicklung 5 fließen kann und somit einen Erregerstrom darstellt.

Zwar beginnt sich unmittelbar nach der Umschaltung in den Bremsbetrieb der Kondensator 63 in der beschriebenen Weise zu entladen, doch steigt andererseits die von dem Anker 2 abgegebene Spannung kräftig an und übernimmt schließlich die Stromversorgung für die Feldwicklung 5 solange der Transistor 32 eingeschaltet ist. Die Folge ist ein schneller Anstieg des durch die Feldwicklung 5 und damit den Widerstand 30 fließenden Stroms.Wenn dieser Strom einen Wert erreicht, der an den Widerstand 30 einen Spannungsabfall erzeugt größer als ein in der Steuerschaltung 34 vorgebener Grenzwert, schaltet die Steuerschaltung 34 den Transistor 32 in den Sperrzustand um. Nunmehr lädt die Ankerspannung den Kondensator 63, während andererseits in den Erregerkreis, der die Feldwicklung 5, den Bremswiderstand 61 sowie die beiden Dioden 62 und 64 enthält, ein abnehmender gedämpfter Erregerstrom fließt.

Nach einer durch die innere Beschaltung der Steuerschaltung 34 festgelegten Zeit wird der Transistor 32 wieder eingeschaltet, damit der Erregerstrom wieder auf den ursprünglichen Wert vor dem Abschalten des Transistors 32 ansteigen kann. Die Stromversorgung erfolgt hierbei wiederum aus dem Anker 2 bzw. aus dem auf der entsprechenden Spannung gehaltenen Kondensator 63, der dazu dient, Spannungsspitzen am Kollektor des Ankers 2 abzubauen. Der Transistor 32 bleibt jetzt wiederum solange eingeschaltet, bis der Strom durch die Feldwicklung denselben Wert erreicht hat, der auch bereits vorher zum Abschalten des Transistors 32 geführt hatte.

Der Transistor 32 wird ersichtlicherweise im Schalterbetrieb verwendet und wird eine feste Zeit ausgeschaltet und eine variable Zeit lang eingeschaltet, wobei die Einschaltzeit festgelegt wird durch die Zeit, die der Strom durch die Erregerwicklung 5 braucht, um wieder auf den festgelegten Grenzwert anzusteigen.

Da der Freilaufstromkreis für die Feldwicklung 5 durch den Bremswiderstand 61 stark bedämpft ist, erfolgt hier weitgehend die Umsetzung der elektrischen Leistung in Wärmeleistung, wobei die elektrische Leistung aus der EMK des Ankers 2 kommt.

Mit der beschriebenen Schaltung wird der Anker 2 mit etwa konstanter Leistung bis nahme dem Stillstand abgebremst, und zwar solange, bis die Selbsterregung zusammenbricht. Dieser Zustand wird, wie bei der Schaltung nach Fig. 2, bei dauernd eingeschaltetem Transistor 32 erreicht. Auf diese Weise wird solange wie möglich die elektrische Bremse wirksam gehalten.

Das Schaltbild für eine zweckmäßige Steuerschaltung ist in Fig. 4 auf der rechten Seite in dem strichpunktiert angedeuteten Schaltungsblock gezeigt. Sie enthält im wesentlichen eine gesteuerte Stromquelle 67 sowie ein Monoflop 68, durch das die Ausschaltzeit des Transistors 32 bestimmt wird.

Von dem Eingang 37, der an den Widerstand 30 angeschlossen ist, führt ein Schutz- oder Vorwiderstand 69 zu der Basis eines bipolaren Transistors 71, dessen Emitter mit dem Stromversorgungseingang 36 und damit mit dem Bezugspotential verbunden ist. Parallel zu der Basis-Emitter-Strecke des Transistors 71 liegt noch ein Siebkondensator 72, so daß sich zusammen mit dem Widerstand 69 ein Tiefpaß ergibt.

Kern des Monoflop 68 ist ein Fensterdiskriminator 73 in Gestalt einer integrierten Schaltung vom Typ 555, an dessen Pin 2 der Kollektor des Transistors 72 angeschlossen ist. Der Fensterdiskriminator 73 ist in bekannter Weise als Monoflop beschaltet, und zwar liegt sein Pin 1 auf dem Bezugspotential, Pin 6 und 7 sind miteinander verbunden und über einen zeitbestimmenden Kondensator 74 an das Bezugspotential der Leitung 31 angeschaltet; außerdem besteht über einen zeitbestimmenden Widerstand 75 eine Verbindung zwischen Pin 4 und Pin 7, wobei Pin 4 mit Pin 8 galvanisch verbunden ist. Pin 3 bildet den Ausgang des Monoflops, an den ein bipolarer Transistor 76 mit seiner Basis über einen Widerstand 80 angeschlossen ist, dessen Emitter ebenfalls mit dem Stromversorgungsanschluß 36 in Verbindung steht. Schließlich ist Pin 2 mit Pin 8, der den Stromversorgungseingang für den Fensterdiskriminator 73 darstellt, über einen Pull-up-Widerstand 77 verbunden, und zur Vermeidung von Störungen ist Pin 8 über einen Kondensator 78 an dem Stromversorgungseingang 36 gepuffert.

Zwecks hinreichend gesiebter Stromversorgung enthält die Steuerschaltung 34 eine von dem Stromversorgungseingang 35 kommende Diode 79, über die ein mit dem Stromversorgungseingang 36 verbundener Siebkondensator 81 aufgeladen wird, und zwar auf die Scheitelspannung der von dem Anker 2 abgegebenen EMK abzüglich dem Spannungsabfall an der Feldwicklung 5. An die Kathode der Diode 79 ist mit seiner Drain-Elektrode ein selbstleitender Feldeffekttransistor 82 angeschaltet, der den Kern der Stromquelle 67 bildet. Die Source-Elektrode des selbstleitenden Feldeffekttransistors 82 liegt über der Serienschaltung eines Widerstands 83 sowie einer Z-Diode 84 an dem Kollektor des Transistors 76. Die Verbindungsstelle zwischen der Kathode der Z-Diode 84 und dem Widerstand 83 stellt den Ausgang 33 der Steuerschaltung 34 dar, an den das Gate des Transistors 32 angeschlossen ist.

Das Gate des Feldeffekttransistors 32 ist einerseits über die Z-Dioden 84 mit dem Kollektor des Transistors 76 und außerdem über einen Widerstand 85 mit der Verbindungsstelle zwischen dem Widerstand 83 und der Z-Diode 84 verbunden.

Eine weitere Z-Diode 86 liegt schließlich zwischen dem Kollektor des Transistors 76 und dem Eingang 37; ihre Kathode ist an den Kollektor des Transistors 76 angeschaltet.

Schließlich führt zur Stromversorgung des Monoflops 68 noch eine Diode 87 von der Source-Elektrode des Transistors 82 zu Pin 8 des Fensterdiskriminators 73.

Die beschriebene Steuerschaltung 34 arbeitet folgendermaßen: Nach dem Anlegen einer Spannung zwischen den Stromversorgungseingängen 35 und 36 wird der Kondensator 81 auf den entsprechenden Scheitelwert aufgeladen. Die Diode 79 verhindert eine Entladung des Kondensators 81 bei durchgeschaltetem Transistor 32.

Mit dem Aufladen des Kondensators 81 steht die Versorgungsspannung für die Stromquelle 67 sowie das Monoflop 68 zur Verfügung. Der nun mit Strom versorgte Feldeffekttransistor 82 beginnt einen Source-Strom zu ziehen, da der Transistor 76 abgeschaltet ist, wodurch der Transistor 32 eine entsprechende positive Versorgungsspannung an seinem Gate erhält und aufgesteuert wird. Die Spannung an dem Gate des Transistors 32 steigt so lange an, bis die Spannung zwischen Source und Gate des Transistors 32 ausreicht, damit durch die Serienschaltung der beiden Z-Dioden 84 und 86 ein Strom fließt, wodurch an der Z-Diode 84 ein Spannungsabfall entsteht, der zu einer negativen Gatevorspannung für den Transistor 82 führt. Der Transistor 82 steuert sich daraufhin weitgehend zu und es fließt nur mehr aus der Source-Elektrode des Transistors 82 der Versorgungsstrom über die Diode 87 zu dem Fensterdiskriminator 73.

Wenn nun infolge des durchgesteuerten Transistors 32 der Erregerstrom durch die Feldwicklung 5 weit genug angestiegen ist, bis er an den Widerstand 30 einen Spannungsabfall erzeugt, der größer ist als die zum Leitendwerden des Transistors 71 notwendige Spannung, wird der Transistor 71 durchgesteuert. Hierdurch wird an Pin 2 des Fensterdiskriminators 73 ein nach null gehender Impuls erzeugt, der daraufhin das in bekannter Weise arbeitende Monoflop 68 triggert. Es gibt an Pin 3 ein Signal zum Durchsteuern des Transistors 76 ab, der daraufhin umgehend die Verbindungsstelle zwischen der Z-Diode 86 und der Z-Diode 84 auf das Bezugspotential der Leitung 31 zieht. Weil dabei nach wie vor Strom durch die Z-Diode 84 fließen kann, bleibt der Transistor 82 in dem vorher erwähnten weitgehenden Sperrzustand. Da außerdem der Versorgungsstrom für das Monoflop 68 nunmehr wegfällt, regelt der Transistor 82 bis auf seinen Ruhestrom zu. Die Stromversorgung für das Monoflop 68 kommt aus dem Kondensator 78, der sich wegen der Diode 87 nicht in unerwünschter Weise ebenfalls über den Transistor 76 entladen kann.

Der Transistor 76 entlädt nun über die in Rückwärtsrichtung leitende Z-Diode 84 die Gatekapazität des Transistors 32, der daraufhin in den Sperrzustand übergeht. In diesem Zustand fließt über die Dioden 62 und 64 in dem Erregerkreis der Freilaufstrom, der durch den Bremswiderstand 61 bedämpft ist.

Nach Ablauf der durch die zeitbestimmenden Bauelemente 74 und 75 festgelegten Triggerzeit des Monoflops 68 kippt dieses in den Ursprungszustand zurück, in dem an Pin 3 keine Spannung mehr abgegeben wird, wodurch der Transistor 76 gesperrt wird. Es fällt augenblicklich der Strom durch die Z-Diode 84 weg, so daß die negative Gatevorspannung für den Transistor 82 weitgehend verschwindet. Der Transistor 82 beginnt zu leiten, wobei der Sourcestrom von der Transistorkennlinie und dem Spannungsabfall an dem Widerstand 83 bestimmt wird. Die Gatekapazität des Transistors 82 wird dabei über den Widerstand 85 entladen, so daß es wieder, wie vorhin erläutert, zum Erzeugen einer positiven Steuerspannung für den selbstsperrenden Feldeffekttransistor 32 kommen kann. Dessen Gatekapazität wird, wie vorerwähnt, über den Transistor 82 aufgeladen, solange, bis die Gatespannung größer ist als die Nennwerte der beiden Z-Dioden 84 und 86. Wenn dieser Zeitpunkt erreicht ist, entsteht, wie erläutert, die negative Gatevorspannung für den Transistor 82, der daraufhin weitgehend zugeregelt wird.

Ersichtlicherweise ist die Steuerschaltung 34 ein pulsweitenmodulierter Oszillator, bei dem die Zeitspanne, während der der Transistor 32 gesperrt ist, durch das Monoflop 68 festgelegt ist. Es spielt keine Rolle, ob das Monoflop 68 retriggerbar ist oder nicht, da in jedem Falle nach dem Abschalten des Transistors 32 auch das Triggersignal an Pin 2 verschwindet.

Die Einschaltzeit des Transistors 32 ist dagegen variabel, womit sich die Taktfrequenz, mit der der Transistor 32 an seinem Gate angesteuert wird, während des Bremsvorgangs verändert. Mit sinkender Drehzahl des Ankers 2 wird die Taktfrequenz niedriger, denn für immer längere Zeiten muß der Transistor 32 eingeschaltet bleiben, um den Strom in der Feldwicklung 5 wieder auf den gewünschten Grenzwert zu bringen.

Auch bei der Schaltung nach den Fig. 3 und 4 wird die Bremsleistung überwiegend in dem Bremswiderstand 61 umgesetzt.

## Patentansprüche

1. Schaltungsanordnung zum vom Netz unabhängigen Bremsen von kleinen, einen Anker (2 ), einen Kollektor und eine Feldwicklung (5) aufweisenden Motoren (1), mit einer Umschalteinrichtung (8 ) zum Verpolen von Anker (2 ) und Feldwicklung (5 ) für den Motor- bzw. Bremsbetrieb, mit einem gesteuerten Leistungshalbleiter (32), der im Bremsbetrieb mit wenigstens einem Teil der Feldwicklung (5 ) eine Serienschaltung bildet, die im Bremsbetrieb zu dem Anker (2) parallelliegt, mit einer Freilaufdiode (26; 62, 64), die im Bremsbetrieb zu dem Teil der Feldwicklung (5 ) parallelgeschaltet ist, der mit dem Leistungshalbleiter (32) in Serie geschaltet ist, und mit einer einen Eingang (37) aufweisenden Steuerschaltung (34) die mit ihrem Ausgang (33) mit dem Leistungshalbleiter (32) verbunden ist, um diesen abwechselnd ein- und auszuschalten, wobei zumindest in einer Zeitspanne des Bremsbetriebs im eingeschalteten Zustand der Erregerstrom durch die Feldwicklung (5) steigt und im ausgeschalteten Zustand mit abnehmender Tendenz über die Freilaufdiode (26; 62, 64) fließt.

2. Schaltungsanordnung nach Anspruch 1, dadurch gekennzeichnet, daß ein Bremswiderstand (25) vorgesehen ist, der zu dem Anker (2 ) im Bremsbetrieb ständig parallelgeschaltet ist.

3. Schaltungsanordnung nach Anspruch 1, dadurch gekennzeichnet, daß ein Bremswiderstand (61) vorgesehen ist, der im Bremsbetrieb mit der Freilaufdiode (62, 64) in Serie liegt.

4. Schaltungsanordnung nach Anspruch 1, dadurch gekennzeichnet, daß der Bremswiderstand (61) von einem Anlaßwiderstand des Universalmotors (1) gebildet ist.

5. Schaltungsanordnung nach Anspruch 1, dadurch gekennzeichnet, daß der Leistungshalbleiter (32) ein selbstsperrender MOS-Fet ist.

6. Schaltungsanordnung nach Anspruch 1, dadurch gekennzeichnet, daß der Leistungshalbleiter (32) ein IGBT ist.

7. Schaltungsanordnung nach Anspruch 1, dadurch gekennzeichnet, daß in Serie mit dem Leistungshalbleiter (32) ein Stromfühler (30) geschaltet ist, der eine dem Strom durch den Leistungshalbleiter (32) proportionale Spannung abgibt, die in dem Eingang (37) der Steuerschaltung (34) eingespeist ist.

8. Schaltungsanordnung nach Anspruch 7, dadurch gekennzeichnet, daß der Stromfühler (30) ein ohmscher Widerstand ist.

9. Schaltungsanordnung nach Anspruch 1, dadurch gekennzeichnet, daß die Steuerschaltung (34) einen Steuereingang (35) aufweist, in den eine der Anker-EMK zumindest proportionale Spannung eingespeist wird.

10. Schaltungsanordnung nach Anspruch 1, dadurch gekennzeichnet, daß die Steuerschaltung (34) den Schaltzustand des Leistungshalbleiters (32) im Sinne eines Konstanthaltens des durch die Feldwicklung (5) fließenden Erregerstromes regelt.

11. Schaltungsanordnung nach Anspruch 1, dadurch gekennzeichnet, daß die Steuerschaltung (34) den Schaltzustand des Leistungshalbleiters (32) im Sinne eines Konstanthaltens der Anker-EMK regelt.

12. Schaltungsanordnung nach Anspruch 1, dadurch gekennzeichnet, daß die Steuerschaltung (34) ein pulsbreitenmoduliertes Signal an den Leistungshalbleiter (32) abgibt.

13. Schaltungsanordnung nach Anspruch 12, dadurch gekennzeichnet, daß die steuerschaltung (34) einen pulsweitenmodulierten Oszillator mit fester Taktfrequenz enthält.

14. Schaltungsanordnung nach Anspruch 12, dadurch gekennzeichnet, daß das Zeitintervall, während dessen der Leistungshalbleiter (32) periodisch ausgeschaltet ist, konstant ist.

15. Schaltungsanordnung nach Anspruch 1, dadurch gekennzeichnet, daß die Steuerschaltung (34) für den Leistungshalbleiter (32) eine gesteuerte Stromquelle (67) enthält.

16. Schaltungsanordnung nach Anspruch 1, dadurch gekennzeichnet, daß im Bremsbetrieb zu dem Anker (2) ein Kondensator (24, 63) parallelgeschaltet ist.

17. Schaltungsanordnung nach Anspruch 1, dadurch gekennzeichnet, daß die Umschalteinrichtung (8 ) einen ersten sowie einen zweiten, jeweils einen Arbeits-, einen Ruhekontakt(14, 15, 16, 17) sowie einen beweglichen Kontakt (12, 13) aufweisenden Umschalter (9, 11) enthält, daß die Feldwicklung (5) mit ihren Anschlüssen (6, 7) an die beweglichen Kontakte (12, 13) angeschaltet ist, daß der Ruhekontakt (14) des ersten Umschalters (9), über eine Parallelschaltung aus einer Diode (18) und einem Speicherkondensator (19) mit einer Netzanschlußklemme (22) verbunden ist, an der außerdem der Anker (2) angeschlossen ist, daß der Arbeitskontakt (16) des ersten Umschalters (9) mit dem Ruhekontakt (15) des zweiten Umschalters (11) über den Leistungshalbleiter (32) verbunden ist, daß der Arbeitskontakt (16) des ersten Umschalters (9) über den Bremswiderstand (25) mit dem beweglichen Kontakt (12) des ersten Umschalters (9) verbunden ist, daß der Ruhekontakt (15) des zweiten Umschalters (11) mit dem beweglichen Kontakt (12) des ersten Umschalters (9) über eine Diode (26) verbunden ist, daß der bewegliche Kontakt (13) des zweiten Umschalters (11) über eine Serienschaltung aus einer Diode (27) und einem Widerstand (28) mit dem Ruhekontakt (14) des ersten Umschalters (9) verbunden ist und daß der Arbeitskontakt (17) des zweiten Umschalters (11) an eine zweite Netzanschlußklemme (29) angeschlossen ist.

18. Schaltungsanordnung nach Anspruch 4, dadurch gekennzeichnet, daß die Umschalteinrichtung (8) zwei jeweils einen Arbeits-, einen Ruhe- und einen beweglichen Kontakt (12, 13, 14, 15, 16, 17) aufweisende Umschalter (9, 11) sowie einen verzögert wirksamen Arbeitskontakt (65) enthält, daß die Feldwicklung (5) mit den beweglichen Kontakten (12, 13) der beiden Umschalter (9, 11) verbunden ist, daß der Ruhekontakt (14) des ersten Umschalters (9) über den Leistungshalbleiter (32) mit einer ersten Netzanschlußklemme (29) verbunden ist, an der außerdem mit einem Anschluß (4) der Anker (2) angeschaltet ist, daß der Arbeitskontakt (16) des ersten Umschalters (9) über den kombinierten Anlaß- und Bremswiderstand (61) mit dem anderen Anschluß (3) des Ankers (2) verbunden ist, daß von dem Arbeitskontakt (16) des ersten Umschalters (9) eine Diode (64) zu dessen beweglichem Kontakt (12) führt, daß der mit dem Bremswiderstand (61) verbundene Anschluß (3) des Ankers (2) über eine Diode (62) an den Ruhekontakt (15) des zweiten Umschalters (11) angeschlossen ist, daß von dem Ruhekontakt (15) des zweiten Umschalters (11) ein Kondensator (63) zu der ersten Netzanschlußklemme (29) sowie eine Serienschaltung aus einer Diode (27) und einem Widerstand (28) zu dem beweglichen Kontakt (13) des zweiten Umschalters (11) führt, daß der Arbeitskontakt (17) des zweiten Umschalters (11) mit einer zweiten Netzanschlußklemme (22) verbunden ist, und daß parallel zu dem Anlaß-/Bremswiderstand (61) der verzögert wirksame Arbeitskontakt (65) liegt.

**Claims**

1. Circuit arrangement for braking small motors (1) having an armature (2), a collector and a field winding (5), independently of the mains supply, including a switchover means (8) for reversing the polarity of the armature (2) and field winding (5) in accordance with motor or braking operation; a controlled power semiconductor (32), which during the braking operation with at least one portion of the field winding (5) forms a series connection which is parallel to the armature (2) during the braking operation; a free wheeling diode (26; 62, 64), which is connected in parallel during the braking operation to the portion of the field winding (5) connected in series to the power semiconductor (32) ; and a control circuit (34) having an input (37) and connected at its output (33) to the power semiconductor (32) to alternately switch this on and off, wherein at least in one time span of the braking operation exciting current through the field winding (5) rises during the on state and flows with decreasing tendency via the free wheeling diode (26; 62, 64) during the off state.

2. Circuit arrangement according to Claim 1, characterised in that a braking resistor (25) is provided which is constantly connected in parallel to the armature (2) during the braking operation.

3. Circuit arrangement according to Claim 1, characterised in that a braking resistor (61) is provided which is connected in series with the free wheeling diode (62, 64) during the braking operation.

4. Circuit arrangement according to Claim 1, characterised in that the braking resistor (61) is formed by a starting resistor of the universal motor (1).

5. Circuit arrangement according to Claim 1, characterised in that the power semiconductor (32) is a enhancement type MOS-FET.

6. Circuit arrangement according to Claim 1, characterised in that the power semiconductor (32) is an IGBT.

7. Circuit arrangement according to Claim 1, characterised in that a current sensor (30) is connected in series with the power semiconductor (32) and provides a voltage proportional to the current through the power semiconductor (32), said voltage being fed into the input (37) of the control circuit (34).

8. Circuit arrangement according to Claim 7, characterised in that the current sensor (30) is an ohmic resistor.

9. Circuit arrangement according to Claim 1, characterised in that the control circuit (34) has a control input (35) into which a voltage is fed which is at least proportional to the e.m.f. of the armature.

10. Circuit arrangement according to Claim 1, characterised in that the control circuit (34) controls the conducting status of the power semiconductor (32) in the sense of keeping constant the exciting current flowing through the field winding (5).

11. Circuit arrangement according to Claim 1, characterised in that the control circuit (34) controls the conducting status of the power semiconductor (32) in the sense of keeping constant the e.m.f. of the armature.

12. Circuit arrangement according to Claim 1, characterised in that the control circuit (34) provides a pulse-width modulated signal for the power semiconductor (32).

13. Circuit arrangement according to Claim 12, characterised in that the control circuit (34) contains a pulse-width modulated oscillator with fixed cycle frequency.

14. Circuit arrangement according to Claim 12, characterised in that the periodical time interval during which the power semiconductor (32) is switched off is constant.

15. Circuit arrangement according to Claim 1, characterised in that the control circuit (34) for the power semiconductor (32) contains a controlled current source (67).

16. Circuit arrangement according to Claim 1, characterised in that a capacitor (24, 63) is connected in parallel to the armature (2) during the braking operation.

**17.** Circuit arrangement according to Claim 1, characterised in that the switchover means (8) include a first and a second changeover switch (9, 11) each having a normally open contact, a normally closed contact (14, 15, 16, 17) as well as a moving contact (12, 13); that the field winding (5) is connected to the moving contact (12, 13) with its terminals (6, 7); that the normally closed contact (14) of the first changeover switch (9) is connected via a parallel connection comprising a diode (18) and a charging capacitor (19) to a mains connection terminal (22), to which the armature (2) is also connected; that the normally open contact (16) of the first changeover switch (9) is connected to the normally closed contact (15) of the second changeover switch (11) via the power semiconductor (32); that the normally open contact (16) of the first changeover switch (9) is connected via the braking resistor (25) to the moving contact (12) of the first changeover switch (9); that the normally closed contact (15) of the second changeover switch (11) is connected to the moving contact (12) of the first changeover switch (9) via a diode (26); that the moving contact (13) of the second changeover switch (11) is connected via a series connection comprising a diode (27) and a resistor (28) to the normally closed contact (14) of the first changeover switch (9); and that the normally open contact (17) of the second changeover switch (11) is connected to a second mains connection terminal (29).

**18.** Circuit arrangement according to Claim 4, characterised in that the switchover means (8) contains two changeover switches (9, 11) each having a normally open contact, a normally closed contact and a moving contact (12, 13, 14, 15, 16, 17) as well as a delayed-action normally open contact (65); that the field winding (5) is connected to the moving contacts (12, 13) of the two changeover switches (9, 11); that the normally closed contact (14) of the first changeover switch (9) is connected via the power semiconductor (32) to a first mains connection terminal (29), to which the armature (2) is also connected at a terminal (4); that the normally open contact (16) of the first changeover switch (9) is connected via the combined starting and braking resistor (61) to the other terminal (3) of the armature (2); that a diode (64) is connected across the normally open contact (16) of the first changeover switch (9) and its moving contact (12); that the terminal (3) of the armature (2) connected to the braking resistor (61) is connected via a diode (62) to the normally closed contact (15) of the second changeover switch (11); that a capacitor (63) connects from the normally closed contact (15) of the second changeover switch (11) to the first mains connection terminal (29) and a series connection comprising a diode (27) and a resistor (28) leads to the moving contact (13) of the second changeover switch (11); that the normally open contact (17) of the second changeover switch (11) is connected to a second mains connection terminal (22); and that the delayed-action normally open contact (65) is parallel to the starting/braking resistor (61).

**Revendications**

**1.** Agencement de circuit pour freiner indépendamment du réseau de petits moteurs (1) comprenant un induit (2), un collecteur et un enroulement d'excitation (5), avec un dispositif de commutation (8) pour inverser la polarité de l'induit (2) et de l'enroulement d'excitation (5) en vue du fonctionnement en mode moteur et en mode frein, avec un semi-conducteur de puissance (32) commandé qui, en mode frein, forme avec au moins une partie de l'enroulement d'excitation (5) un circuit série qui est connecté en parallèle avec l'induit (2), avec une diode roue-libre (26; 62, 64) qui, en mode frein, est connectée en parallèle avec la partie de l'enroulement d'excitation (5) placée en série avec le semi-conducteur (32) de puissance et avec un circuit de commande (34) qui est pourvu d'une entrée (37) et dont la sortie (33) est connectée au semi-conducteur de puissance (32) aux fins d'amener celui-ci alternativement à l'état passant et à l'état bloquant, le courant d'excitation qui traverse l'enroulement d'excitation (5) augmentant à l'état passant et chutant à travers la diode roue-libre (26; 62, 64) à l'état bloquant, au moins pendant une partie du fonctionnement en mode frein.

**2.** Agencement de circuit selon la revendication 1, caractérisé par le fait qu'il est prévu une résistance de freinage (25) qui, en mode frein, est connectée de manière permanente en parallèle avec l'induit (2).

**3.** Agencement de circuit selon la revendication 1, caractérisé par le fait qu'il est prévu une résistance de freinage (61) qui, en mode frein, est placée en série avec la diode roue libre (62, 64).

**4.** Agencement de circuit selon la revendication 1, caractérisé par le fait que la résistance de freinage (61) est constituée par une résistance de démarrage du moteur universel (1).

**5.** Agencement de circuit selon la revendication 1, caractérisé par le fait que le semi-conducteur de puissance (32) est un transistor à effet de champ de type MOS à autoblocage.

**6.** Agencement de circuit selon la revendication 1, caractérisé par le fait que le semi-conducteur de puissance (32) est un IGBT.

7. Agencement de circuit selon la revendication 1, caractérisé par le fait qu'un détecteur de courant (30) est connecté en série avec le semi-conducteur de puissance (32), lequel détecteur délivre une tension qui est proportionnelle au courant traversant le semi-conducteur de puissance (32) et est envoyée à l'entrée (37) du circuit de commande (34).

8. Agencement de circuit selon la revendication 7, caractérisé par le fait que le détecteur de courant (30) est une résistance ohmique.

9. Agencement de circuit selon la revendication 1, caractérisé par le fait que le circuit de commande (34) comporte une entrée de commande (35) à laquelle est envoyée une tension qui est au moins proportionnelle à la force électromotrice de l'induit.

10. Agencement de circuit selon la revendication 1, caractérisé par le fait que le circuit de commande (34) régule l'état de commutation du semi-conducteur de puissance (32) dans le sens du maintien à une valeur constante du courant d'excitation traversant l'enroulement d'excitation (5).

11. Agencement de circuit selon la revendication 1, caractérisé par le fait que le circuit de commande (34) régule l'état de commutation du semi-conducteur de puissance (32) dans le sens du maintien de la force électromotrice de l'induit à une valeur constante.

12. Agencement de circuit selon la revendication 1, caractérisé par le fait que le circuit de commande (34) délivre au semi-conducteur de puissance (32) un signal modulé en durée d'impulsion.

13. Agencement de circuit selon la revendication 12, caractérisé par le fait que le circuit de commande (34) comprend un oscillateur modulé en durée d'impulsion, à fréquence d'horloge fixe.

14. Agencement de circuit selon la revendication 12, caractérisé par le fait que l'intervalle de temps pendant lequel le semi-conducteur de puissance (32) est périodiquement bloquant est constant.

15. Agencement de circuit selon la revendication 1, caractérisé par le fait que le circuit de commande (34) pour le semi-conducteur de puissance (32) comporte une source de tension (67) commandée.

16. Agencement de circuit selon la revendication 1, caractérisé par le fait qu' en mode frein, un condensateur (24, 63) est connecté en parallèle avec l'induit (2).

17. Agencement de circuit selon la revendication 1, caractérisé par le fait que le dispositif de commutation (8) comporte un premier et un deuxième commutateur (9, 11) avec chacun un contact de travail et un contact de repos (14, 15, 16, 17) et un contact mobile (12, 13), par le fait que l'enroulement d'excitation (5) est connecté par ses bornes (67) aux contacts mobiles (12, 13), par le fait que le contact de repos (14) du premier commutateur (9) est connecté, par l'intermédiaire d'un montage série d'une diode (18) et d'un condensateur d'accumulation (19), à une borne (22) du réseau à laquelle est également connecté l'induit (2), par le fait que le contact de travail (16) du premier commutateur (9) est connecté au contact de repos (15) du deuxième commutateur (11) par l'intermédiaire du semi-conducteur de puissance (32), par le fait que le contact de travail (16) du premier commutateur (9) est connecté au contact mobile (12) du premier commutateur (9) par l'intermédiaire de la résistance de freinage (25), par le fait que le contact de repos (15) du deuxième commutateur (11) est connecté au contact mobile (13) du premier commutateur (9) par l'intermédiaire d'une diode (26), par le fait que le contact mobile (13) du deuxième commutateur (11) est connecté au contact de repos (14) du premier commutateur (9) par l'intermédiaire d'un montage série d'une diode (27) et d'une résistance (28) et par le fait que le contact de travail (17) du deuxième commutateur (11) est connecté à une deuxième borne (29) du réseau.

18. Agencement de circuit selon la revendication 4, caractérisé par le fait que le dispositif de commutation (8) comporte deux commutateurs (9, 11) avec chacun un contact de travail, un contact de repos et un contact mobile (12, 13, 14, 15, 16, 17) ainsi qu'un contact de travail (65) temporisé, par le fait que l'enroulement d'excitation (5) est connecté aux contacts mobiles (12, 13) des deux commutateurs (9, 11), par le fait que le contact de repos (14) du premier commutateur (9) est connecté, par l'intermédiaire du semi-conducteur de puissance (32), à une première borne (29) du réseau à laquelle est en outre connecté l'induit (2) par une borne (4), par le fait que le contact de travail (16) du premier commutateur (9) est connecté à l'autre borne (3) de l'induit (2) par l'intermédiaire de la résistance (61) combinée de démarrage et de freinage, par le fait qu'une diode (62) mène du contact de travail (16) du premier commutateur (9) au contact mobile (12) de ce dernier, par le fait que la borne (3) de l'induit (2) connectée à la résistance de freinage (61) est connectée au contact de repos (15) du deuxième commutateur (11) par l'intermédiaire d'une diode (62), par le fait qu'un condensateur (63) mène du contact de repos (15) du deuxième commutateur (11) à la première borne du réseau (29) et un montage série d'une diode (27) et d'une résistance (28) mène au contact mobile (13) du deuxième commutateur (11), par le fait que le contact de travail (17) du deuxième commutateur (11) est connecté à une deuxième borne (22)du réseau et par le fait que le contact de travail (65) temporisé est placé en parallèle avec la résistance (61) de démarrage et de freinage.

Fig. 1

Fig. 2

EP 0 551 896 B1

Fig. 3

Fig. 4

EP 0 551 896 B1